(19) **Europäisches Patentamt**

**European Patent Office**

**Office européen des brevets**

(11) Veröffentlichungsnummer: **0 022 526**
**B1**

(12) **EUROPÄISCHE PATENTSCHRIFT**

(45) Veröffentlichungstag der Patentschrift:
20.06.84

(21) Anmeldenummer: 80103815.9

(22) Anmeldetag: 04.07.80

(51) Int. Cl.³: **C 02 F 1/72, C 02 F 9/00**

(54) Verfahren zur Abwasserbehandlung.

(30) Priorität: 11.07.79 DE 2927912

(43) Veröffentlichungstag der Anmeldung:
21.01.81 Patentblatt 81/3

(45) Bekanntmachung des Hinweises auf die Patenterteilung:
20.06.84 Patentblatt 84/25

(84) Benannte Vertragsstaaten:
**DE FR GB IT**

(56) Entgegenhaltungen:
AT - B - 339 221
DE - A - 2 521 893
DE - A - 2 615 036
FR - A - 766 621

**PATENT ABSTRACTS OF JAPAN, unexaminated applications, C Section, Band 1, No. 84, 6.August 1977, THE PATENT OFFICE JAPANESE GOVERNMENT, Seite 1698 C 77**

(73) Patentinhaber: **BAYER AG, Konzernverwaltung RP**
**Patentabteilung, D-5090 Leverkusen 1 Bayerwerk (DE)**

(72) Erfinder: **Wilms, Klaus Günter, Dr., Siegstrasse 3,**
**D-4047 Dormagen 1 (DE)**
Erfinder: **Waldmann, Helmut, Dr.,**
**Carl-Rumpff-Strasse 59, D-5090 Leverkusen 1 (DE)**

ACTORUM AG

## Beschreibung

Bei einigen Prozessen fallen Abwässer an, die mit den üblichen Methoden der Belebtschlammbehandlung biologisch nicht abbaubar sind bzw. deren Inhaltstoffe in biologischen Kläranlagen häufig Probleme bewirken, da sich der Belebtschlamm nicht rasch genug an die verschiedenen Chemikalien im Abwasser anpassen kann. Dies gilt insbesondere bei diskontinuierlichem Anfall solcher Abwässer und bei schwankender Fracht. Auch bei nichttoxischen Inhaltstoffen werden Anpassungsschwierigkeiten durch zeitliche und mengenmässige Schwankungen des anfallenden Abwassers beobachtet.

Es ist bekannt, Wasserstoffperoxid als Oxidationsmittel zur Abwasserreinigung in Gegenwart von Übergangsmetallverbindungen einzusetzen. So wird in der japanischen Patentanmeldung 51-132 057 vorgeschlagen, dem Abwasser, bezogen auf den CSB-Gehalt des Abwassers, die theoretisch zur Totaloxidation notwendige Menge Wasserstoffperoxid zuzusetzen. Der Einsatz einer dem CSB-Gehalt der Abwässer stöchiometrisch äquivalenten Wasserstoffperoxid-Menge erbringt aber nur eine CSB-Senkung im Abwasser und ein Restgehalt an CSB bleibt übrig, da das eingesetzte Wasserstoffperoxid nicht zu 100% zur CSB-Senkung ausgenutzt wird.

Um eine weitergehende CSB-Senkung zu erzielen, kann die zugegebene Wasserstoffperoxid-Menge erhöht werden. So wird beispielsweise in der japanischen Patentanmeldung 51-136 947 eine Wasserstoffperoxid-Zugabe vorgeschlagen, die über der zweifachen Menge liegt, die nach dem CSB-Gehalt der Abwässer theoretisch zur Totaloxidation benötigt wird. Diese Erhöhung der Wasserstoffperoxid-Zugabe stellt zwar eine Möglichkeit zur Verminderung des CSB-Gehaltes dar, im Abwasser verbleibt jedoch immer noch ein Restgehalt an CSB, und die Wasserstoffperoxid-Ausnutzung ist in diesem Fall kleiner als 50%.

In der japanischen Patentanmeldung 53-063 760 wird vorgeschlagen, während der Behandlung der Abwässer mit Wasserstoffperoxid in Gegenwart von Übergangsmetallverbindungen gleichzeitig Sauerstoff einzuleiten, da sonst keine Verminderung des CSB-Gehaltes erreicht werden kann.

Mit den vorgeschlagenen Verfahren kann das eingesetzte, hoch einstehende Wasserstoffperoxid jedoch nie vollständig ausgenutzt werden, teilweise muss ausserdem noch Sauerstoff in das zu behandelnde Abwasser eingeleitet werden, und in allen Fällen treten bei der nachgeschalteten Abwasserreinigung nach dem Belebtschlammverfahren Betriebsstörungen auf.

Nach der DE-A 2 521 893 werden spezielle Abwasser aus der Cellulose-Herstellung unter Zugabe geringer Mengen Wasserstoffperoxid gereinigt. Der dort beschriebene Reinigungseffekt nimmt bei einer Erhöhung der $H_2O_2$-Zugabe auf bis 12% ab. Bei dem beschriebenen Verfahren handelt es sich im wesentlichen nicht um eine Oxidation, sondern um die Fällung von Ligninsulfonsäuren als basische Erdalkalisalze.

Es wurde nun gefunden, dass man den CSB-Gehalt von Abwässern mit Wasserstoffperoxid in Gegenwart von Übergangsmetallverbindungen ohne Nachteile für ein nachgeschaltetes biologisches Abwasserreinigungsverfahren in unerwartetem Masse senken kann, wenn man die Abwässer zunächst mit Wasserstoffperoxid in Gegenwart von Übergangsmetallverbindungen unter bestimmten Bedingungen und anschliessend mit einer Flockulationsadsorption behandelt. Durch diese spezielle Behandlung wird überraschenderweise auch der Rest-CSB-Gehalt des Abwassers biologisch abbaubar.

Gegenstand der vorliegenden Erfindung ist daher ein Verfahren zur Verminderung des CSB-Gehaltes von Abwässern durch Behandlung mit Wasserstoffperoxid in Gegenwart von Übergangsmetallverbindungen, das dadurch gekennzeichnet ist, dass dem Abwasser 15 bis 40% der berechneten, zur Totaloxidation des Gesamt-CSB-Gehaltes des Abwassers benötigten Mengen an $H_2O_2$ zugesetzt, während der Behandlung eine Temperatur von 5 bis 100 °C aufrechterhalten, im Abwasser ein Ausgangs-pH-Wert von 3,5 bis 6,5 eingestellt und in dem Abwasser eine solche Menge wasserlöslicher Eisenverbindungen, dass das Molverhältnis von zugesetztem $H_2O_2$ zu Eisenverbindungen im Abwasser mindestens 3 : 1 beträgt, gelöst und anschliessend nach einer Flockulationsadsorption das Geflockte, gegebenenfalls nach Zugabe basischer Stoffe, abgetrennt wird.

Mit der vorliegenden Erfindung können biologisch nicht oder nur schwer abbaubare Abwasserinhaltstoffe überraschenderweise in biologisch abbaubare Stoffe überführt werden, d.h. nach der erfindungsgemässen Wasserstoffperoxid-Behandlung in Gegenwart von Eisenverbindungen und der darauffolgenden Flockulationsadsorption ist der verbleibende CSB-Gehalt des Abwassers biologisch abbaubar.

Ferner überrascht, dass durch die Kombination der Wasserstoffperoxid-Behandlung – bei einer auf den CSB-Gehalt des zu behandelnden Abwassers bezogenen Wasserstoffperoxid-Dosierung von 15 bis 40% – mit einer Flockulationsadsorption und Fällung in dem so behandelten Abwasser eine wesentlich grössere CSB-Verminderung als durch eine additive Zusammenfassung der einzelnen getrennt durchgeführten Verfahrensschritte zu erwarten ist, erzielt werden kann. So erreicht man z.B. durch die Kombination dieser beiden Methoden zur Abwasserreinigung bei den erfindungsgemässen speziellen Bedingungen bei einem Abwasser mit einem CSB-Gehalt von 80 000 mg/l eine CSB-Senkung von 48 500 mg/l. Das sind 14 500 mg/l CSB-Senkung mehr, als man nach der Addition der getrennt durchgeführten Verfahren erwarten würde. Die erfindungsgemässe Kombination der Wasserstoffperoxid-Behandlung mit der sich anschliessenden Flockulationsadsorption und Fällung erbringt unter den erfindungsgemässen Bedingungen eine zusätzliche CSB-Senkung, im vorstehend beschriebenen Fall von 42,6%.

Bei dem anfallenden Abwasser, das sowohl kontinuierlich als auch diskontinuierlich behandelt werden kann, wird zunächst analytisch der CSB-Gehalt festgestellt. Das Abwasser wird dann auf eine Temperatur zwischen ca. 5 bis 100 °C, vorzugsweise ca. 20 bis 45 °C, besonders bevorzugt ca. 25 bis 34 °C, gebracht. Der pH-Wert des Abwassers wird auf Werte zwischen ca. 3,5 bis 6,5, bevorzugt ca. 4,0 bis 5,0, eingestellt.

Das Abwasser wird nun mit Wasserstoffperoxid in einer Menge von 15 bis 40% der theoretisch zur Totaloxidation des CBS-Gehaltes notwendigen Menge behandelt. Vorzugsweise werden bis 35%, besonders bevorzugt bis 30% der berechneten Menge an $H_2O_2$ zugesetzt. Überraschenderweise wird bei dieser Behandlung das zugesetzte Wasserstoffperoxid vollständig zum Abbau des CSB-Gehaltes ausgenutzt, während bei bezogen auf den CSB-Gehalt stöchiometrischer bzw. überstöchiometrischer Wasserstoffperoxid-Dosierung ein Grossteil des Wasserstoffperoxids nicht zur CSB-Verminderung beiträgt.

Die Zersetzung des Wasserstoffperoxids wird mit löslichen Eisenverbindungen vorgenommen. Als Eisenverbindungen werden lösliche sowohl Eisen(II)- und/oder Eisen(III)-Verbindungen eingesetzt; des weiteren sowohl oxidische als auch sulfidische Erze, wie z.B. Magnet-, Rot- und Brauneisensteine oder Eisenkies. In vielen Fällen werden Eisen(III)-Verbindungen, wie Fe(OH)$_3$, Fe$_2$O$_3$, FeCl$_3$ und/oder Fe$_2$(SO$_4$)$_3$ als Katalysator gewählt. Vorzugsweise werden Eisen(II)-Verbindungen, wie FeO, Fe(OH)$_2$, FeCl$_2$, FeCO$_3$, ganz besonders bevorzugt FeSO$_4 \cdot 7H_2O$ bzw. sogenanntes Grünsalz aus der Titandioxid-Herstellung, als Katalysator eingesetzt.

Das einzustellende Molverhältnis von Wasserstoffperoxid zu Eisen richtet sich nach der Art und Konzentration der Abwasserinhaltstoffe, der Reaktionstemperatur und dem angestrebten Flokkungseffekt bei der nachfolgenden Neutralisation. Bei leicht oxidierbarem Abwasser und einem Temperaturbereich von beispielsweise 20 bis 35 °C wird bei einem Molverhältnis von Wasserstoffperoxid zu Eisen von 30 : 1 bis 3 : 1, vorzugsweise von 20 : 1 bis 10 : 1, ganz besonders bevorzugt von 18 : 1 bis 13 : 1, gearbeitet. Bei höheren Temperaturen reichen auch geringere Mengen von Eisenverbindungen aus, beispielsweise kann man bei dem gleichen Abwasser, jedoch bei einem Temperaturbereich von 40 bis 60 °C, bei einem Molverhältnis von Wasserstoffperoxid zu Eisen im Verhältnis von 100 : 1 bis 60 : 1 gearbeitet werden. Bei noch höheren Temperaturen nimmt das Molverhältnis entsprechend noch weiter zu. Demgegenüber erfordern jedoch Abwasserinhaltstoffe, die Eisen komplexieren oder selbst unter gewöhnlichen Bedingungen nur schwer zu oxidieren sind, wie z.B. Phosphate, Phosphorsäurederivate und N-Heterocyclen Eisendosierungen im Molverhältnis Wasserstoffperoxid zu Eisen von bis zu 3 : 1.

Die Reaktionsführung bei der vorliegenden Erfindung kann sowohl isotherm als auch adiabatisch erfolgen. Erfindungsgemäss wird in einem Temperaturbereich von ca. 5 bis 100 °C, vorzugsweise ca. 20 bis 45 °C, ganz besonders bevorzugt bei ca. 25 bis 35 °C, gearbeitet. In Spezialfällen kann sowohl bei isothermer als auch adiabatischer Reaktionsführung der angegebene Temperaturbereich noch unter- oder überschritten werden, wobei unter Umständen auch unter erhöhtem oder vermindertem Druck gearbeitet werden kann.

Nach der Behandlung des Abwassers mit Wasserstoffperoxid in Gegenwart von Eisenverbindungen, wird das behandelte Abwasser biologisch weiterbehandelt oder auch in Ausnahmefällen anderweitig abgegeben. Das Abwasser ist sauer und muss gegebenenfalls auf den für die biologische Behandlung notwendigen pH-Wert eingestellt werden. Dieser Teilschritt des erfindungsgemässen Verfahrens wird mit basisch reagierenden Stoffen, also beispielsweise Kaliumhydroxid, Natriumhydroxid, vorzugsweise jedoch mit Kalziumverbindungen, wie z.B. Kalziumoxid, Kalziumhydroxid und/oder Kalziumcarbonat, besonders bevorzugt mit Kalkmilch durchgeführt. Hierbei werden die im Abwasser vorhandenen Eisenionen, als Hydroxide gefällt und dadurch eine Flokkulationsadsorption bewirkt. Die in seltenen Fällen schon vorher geflockten bzw. bei der Zugabe von basischen Stoffen oder gegebenenfalls nach Zugabe von Flockungshilfsmitteln geflockten und gefällten Stoffe werden abgetrennt, vorzugsweise durch Filtration, Sedimentation, Flotation oder Zentrifugieren.

Überraschenderweise lässt sich mit dem erfindungsgemässen Verfahren eine höhere CSB-Verminderung des Abwassers erreichen, als sich aufgrund des CSB-Abbaus durch separate Wasserstoffperoxid-Behandlung und Flokkulationsadsorption erzielen lässt. Mit anderen Worten, die erfindungsgemässe Abwasserbehandlung mit einer, bezogen auf die zur theoretischen Totaloxidation des gesamten CSB-Gehaltes notwendigen, stark unterstöchiometrischen Menge an Wasserstoffperoxid und darauffolgender Flokkulationsadsorption ergibt nicht nur den additiven Wert für die CSB-Verminderung aus beiden Teilschritten, sondern einen weit höheren Wert.

Mit dem erfindungsgemässen Verfahren erhält man also nicht nur biologisch abbaubare Produkte und eine praktisch quantitative Wasserstoffperoxid-Nutzung, sondern auch einen höheren als den berechneten Abbau des CSB-Gehaltes des Abwassers.

Das erfindungsgemässe Verfahren soll nun anhand der folgenden Beispiele noch näher erläutert werden.

Beispiel 1

Ein Mischabwasser wies folgende CSB-, BSB$_5$- und pH-Werte auf:

CSB:   68 500 mg/l
BSB$_5$:   9 800 mg/l
pH:     4,7

Die Schadwirkung dieses Abwassers gegen Pseudomonas fluorescens lag bis zur Verdünnung 1 : 200, gegen Leuciscus idus bei 1 : 100 vor.

Das oben charakterisierte Abwasser wurde jeweils

a) einer Wasserstoffperoxid-Oxidation in Gegenwart jeweils gleicher Menge Eisen(II)-sulfat,

b) einer Flockung und Fällung mit $FeSO_4 \cdot 7H_2O$ als Flockungsmittel und

c) einer Kombination von Wasserstoffperoxid-Behandlung gemäss a) mit sich anschliessender Flockung und Fällung gemäss b) unterzogen (Angaben immer bezogen auf 1 l Abwasser).

a) Wasserstoffperoxid-Oxidation
1. Zugabe von 26,19 g $FeSO_4 \cdot 7H_2O$
2. pH-Einstellung mit Kalkmilch auf pH = 4,0
3. Zugabe von 96,1 g 50%igem $H_2O_2$
   Bei ca. 25 °C wurde 1 h lang gerührt. Der CSB des so behandelten Abwassers war:

CSB: 45 888 mg/l

b) Flockung und Fällung
1. Zugabe von 26,19 g $FeSO_4 \cdot 7H_2O$
2. 15 Minuten Rühren bei ca. 25 °C
3. Neutralisation mit Kalkmilch auf pH = 7,5
4. Abtrennung des Sediments und Einstellung desselben mit Kalkmilch auf pH = 11
5. Filtration
   Der CSB der vereinigten Filtrate war:

CSB: 45 100 mg/l

c) Kombination von Wasserstoffperoxid-Behandlung und Flockung und Fällung
1. Zugabe von 26,19 g $FeSO_4 \cdot 7H_2O$
2. pH-Einstellung mit Kalkmilch auf pH = 4,0
3. Zugabe von 96,1 g 50%igem $H_2O_2$
4. 60 Minuten Rühren bei ca. 25 °C
5. Neutralisation mit Kalkmilch auf pH = 7,5
6. Abtrennung des Sediments und Einstellung desselben mit Kalkmilch auf pH = 11
7. Filtration
   Der CSB der vereinigten Filtrate war:

CSB: 17 600 mg/l

Dieses Abwasser wurde einer nachfolgenden biologischen Abwasserreinigung unterzogen.

Beispiel 2
Ein Mischabwasser wies folgende CSB-, $BSB_5$- und pH-Werte auf:

CSB:    53 210 mg/l
$BSB_5$:    980 mg/l
pH:    8,3

Die Schadwirkung dieses Abwassers gegen Pseudomonas fluorescens lag bis zur Verdünnung 1 : 150, gegen Leuciscus idus bei 1 : 80 vor.

Das oben charakterisierte Abwasser wurde jeweils

a) einer Wasserstoffperoxid-Oxidation in Gegenwart jeweils gleicher Mengen Eisen(II)-sulfat,

b) einer Flockung und Fällung mit $FeSO_4 \cdot 7H_2O_2$ als Flockungshilfsmittel und

c) einer Kombination von Wasserstoffperoxid-Behandlung gemäss a) mit sich anschliessender Flockung und Fällung b) unterzogen (Angaben bezogen auf 1 l Abwasser).

a) Wasserstoffperoxid-Oxidation
1. Zugabe von 9,25 g $FeSO_4 \cdot 7H_2O$
2. pH-Einstellung mit $H_2SO_4$ auf pH = 4,0
3. Zugabe von 34,0 g 50%igem $H_2O_2$
   Bei ca. 25 °C wurde 1 h lang gerührt. Der CSB des so behandelten Abwassers war:

CSB: 45 209 mg/l

b) Flockung und Fällung
1. Zugabe von 9,25 g $FeSO_4 \cdot 7H_2O$
2. 15 Minuten Rühren bei ca. 25 °C
3. Neutralisation mit Kalkmilch auf pH = 7,5
4. Abtrennung des Sediments und Einstellung desselben mit Kalkmilch auf pH = 11
5. Filtration
   Der CSB der vereinigten Filtrate war:

CSB: 49 720 mg/l

c) Kombination von Wasserstoffperoxid-Behandlung und Flockung und Fällung
1. Zugabe von 9,25 g $FeSO_4 \cdot 7H_2O$
2. pH-Einstellung mit $H_2SO_4$ auf pH = 4,0
3. Zugabe von 34,0 g 50%igem $H_2O_2$
4. 60 Minuten Rühren bei ca. 25 °C
5. Neutralisation mit Kalkmilch auf pH = 7,5
6. Abtrennung des Sediments und Einstellung desselben mit Kalkmilch auf pH = 11
7. Filtration
   Der CSB der vereinigten Filtrate war:

CSB: 33 120 mg/l

Dieses Abwasser wurde anschliessend noch biologisch nachbehandelt.

**Patentansprüche**

1. Verfahren zur Verminderung des CSB-Gehaltes von Abwässern durch Behandlung mit Wasserstoffperoxid in Gegenwart von Übergangsmetallverbindungen, dadurch gekennzeichnet, dass dem Abwasser 15 bis 40% der berechneten, zur Totaloxidation des Gesamt-CSB-Gehaltes des Abwassers benötigten Mengen an $H_2O_2$ zugesetzt, während der Behandlung eine Temperatur von 5 bis 100 °C aufrechterhalten, im Abwasser ein Ausgangs-pH-Wert von 3,5 bis 6,5 eingestellt und in dem Abwasser eine solche Menge wasserlöslicher Eisenverbindungen, dass das Molverhältnis von zugesetztem $H_2O_2$ zu Eisenverbindungen im Abwasser mindestens 3 : 1 beträgt, gelöst und anschliessend nach einer Flockulationsadsorption das Geflockte, gegebenenfalls nach Zugabe basischer Stoffe, abgetrennt wird.

2. Verfahren nach Anspruch 1, dadurch gekennzeichnet, dass der Ausgangs-pH-Wert auf Werte zwischen 4,0 bis 5,0 eingestellt wird.

3. Verfahren nach Anspruch 1 oder 2, dadurch gekennzeichnet, dass dem Abwasser 15 bis 35% der berechneten, zur Totaloxidation des Gesamt-CSB-Gehaltes des Abwassers benötigten Menge an $H_2O_2$ zugesetzt wird.

4. Verfahren nach einem oder mehreren der Ansprüche 1 bis 3, dadurch gekennzeichnet, dass eine solche Menge von Eisenverbindungen zugesetzt wird, dass das Molverhältnis von zugesetztem Wasserstoffperoxid zu Eisenverbindungen im Abwasser 30 : 1 bis 3 : 1, vorzugsweise 20 : 1 bis 10 : 1, besonders bevorzugt 18 : 1 bis 13 : 1, beträgt.

## Claims

1. Process for decreasing the COD content of effluents by treatment with hydrogen peroxide in the presence of transition metal compounds, characterised in that 15 to 40% of the calculated quantities of $H_2O_2$ required for the total oxidation of the total COD content of the effluent is added to the effluent, a temperature of 5 to 100 °C is maintained during the treatment, a starting pH value of 3.5 to 6.5 is adjusted in the effluent and such a quantity of water-soluble iron compounds is dissolved in the effluent that the molar ratio of added $H_2O_2$ to iron compounds in the effluent is at least 3 : 1, and then, after a flocculation adsorption, the flocculated material is separated off, optionally after the addition of basic substances.

2. Process according to Claim 1, characterised in that the starting pH value is adjusted to values between 4.0 and 5.0.

3. Process according to Claim 1 or 2, characterised in that 15 to 35% of the calculated quantity of $H_2O_2$ required for the total oxidation of the total COD content of the effluent is added to the effluent.

4. Process according to one or more of Claims 1 to 3, characterised in that the quantity of iron compounds added is such that the molar ratio of added hydrogen peroxide to iron compounds in the effluent is 30 : 1 to 3 : 1, preferably 20 : 1 to 10 : 1, and particularly preferably 18 : 1 to 13 : 1.

## Revendications

1. Procédé pour diminuer la teneur d'eaux résiduaires en des substances responsables de la demande chimique en oxygène, par traitement par du peroxyde d'hydrogène en présence de composés de métaux de transition, procédé caractérisé en ce qu'on ajoute à l'eau résiduaire 15 à 40% de la quantité de $H_2O_2$, calculée comme nécessaire pour l'oxydation totale de la teneur complète de l'eau résiduaire en les substances responsables de la demande chimique en oxygène, on maintient pendant le traitement une température de 5 à 100 °C, on règle l'eau résiduaire à un pH de départ de 3,5 à 6,5, on dissout dans l'eau résiduaire une quantité de composés hydrosolubles de fer telle que le rapport molaire de $H_2O_2$ ajouté aux composés du fer dans l'eau résiduaire se situe au moins à 3 : 1 et, éventuellement après addition de substances basiques, on sépare après une floculation-adsorption la matière floculée.

2. Procédé selon la revendication 1, caractérisé en ce qu'on règle le pH de départ à des valeurs comprises entre 4,0 et 5,0.

3. Procédé selon la revendication 1 ou 2, caractérisé en ce qu'on ajoute à l'eau résiduaire 15 à 35% de la quantité calculée comme nécessaire pour l'oxydation totale de l'ensemble des substances responsables de la demande chimique d'oxygène contenue dans l'eau résiduaire.

4. Procédé selon l'une ou plusieurs des revendications 1 à 3, caractérisé en ce qu'on ajoute une quantité de composés du fer telle que le rapport molaire du peroxyde d'hydrogène ajouté aux composés du fer dans l'eau résiduaire se situe entre 30 : 1 et 3 : 1, avantageusement entre 20 : 1 et 10 : 1 et de façon tout à fait préférée entre 18 : 1 et 13 : 1.